# EUROPEAN PATENT APPLICATION

(11) **EP 4 546 791 A1**
(43) Date of publication of application: **30.04.2025**
(21) Application number: 23827514.3
(22) Date of filing: 21.06.2023
(51) Int. Cl.: H04N 19/82, H04N 19/86, H04N 19/70, H04N 19/184

(54) **IMAGE ENCODING/DECODING METHOD, BITSTREAM TRANSMISSION METHOD, AND RECORDING MEDIUM STORING BITSTREAM**

(30) Priority: 21.06.2022 US 202263353845 P
(71) Applicant: LG Electronics Inc., Yeongdeungpo-gu Seoul 07336 (KR)
(72) Inventor: TAN, Hendry, Seoul 06772 (KR); KIM, Seung Hwan, Seoul 06772 (KR)
(74) Representative: Frenkel, Matthias Alexander
(86) International application number: PCT/KR2023/008602
(87) International publication number: WO 2023/249404

(57) **Abstract**

An image encoding/decoding method, a bitstream transmission method, and a computer-readable recording medium storing the bitstream are provided. The image decoding method according to the present disclosure may be an image decoding method performed by an image decoding device, comprising the steps of: determining the type of a virtual boundary; and determining whether to apply an in-loop filter to a block on the basis of the type of the virtual boundary, wherein the type of the virtual boundary comprises a type having the in-loop filter for the block deactivated undirectionally with respect to the virtual boundary.

## Description

### Technical Field

The present disclosure relates to an image encoding/decoding method and apparatus, a method of transmitting a bitstream and a recording medium storing a bitstream, and relates to a new type of virtual boundary.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, an object of the present disclosure is to propose a new type of virtual boundary called a directional virtual boundary.

In addition, an object of the present disclosure is to propose syntax representing a type of a virtual boundary.

In addition, an object of the present disclosure is to provide a non-transitory recording medium storing a bitstream generated by an image encoding method according to the present disclosure.

In addition, an object of the present disclosure is to provide a non-transitory recording medium storing a bitstream received, decoded and used to reconstruct an image by an image decoding apparatus according to the present disclosure.

In addition, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise determining a type of a virtual boundary and determining whether to apply an in-loop filter to a block based on the type of the virtual boundary. The type of the virtual boundary may include a type in which the in-loop filter for the block is unidirectionally disabled for the virtual boundary.

An image encoding method according to another aspect of the present disclosure is an image encoding method performed by an image encoding apparatus. The image encoding method may comprise determining whether to apply an in-loop filter to a block corresponding to a virtual boundary and determining a type of the virtual boundary based on the determination of whether to apply the in-loop filter. The type of the virtual boundary may include a type in which the in-loop filter for the block is unidirectionally disabled for the virtual boundary.

Also, a computer-readable recording medium according to another aspect of the present disclosure may store a bitstream generated by an image encoding method or apparatus according to the present disclosure.

Also, a transmission method according to another aspect of the present disclosure may transmit a bitstream generated by an image encoding method or apparatus according to the present disclosure.

The features briefly summarized above with respect to the present disclosure are merely exemplary aspects of the detailed description below of the present disclosure, and do not limit the scope of the present disclosure.

### Advantageous Effects

According to the present disclosure, it is possible to provide an image encoding/decoding method and apparatus with improved encoding/decoding efficiency.

In addition, according to the present disclosure, a new type of virtual boundary can be provided.

In addition, according to the present disclosure, it becomes possible to perform in-loop filtering of a block in an unrefreshed area using samples in a refreshed area, thereby improving coding efficiency and subjective image quality.

Also, according to the present disclosure, it is possible to provide a non-transitory recording medium storing a bitstream generated by an image encoding method according to the present disclosure.

Also, according to the present disclosure, it is possible to provide a non-transitory recording medium storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

### Description of Drawings

FIG. 1 is a view schematically showing a video coding system, to which an embodiment of the present disclosure is applicable.
FIG. 2 is a view schematically showing an image encoding apparatus, to which an embodiment of the present disclosure is applicable.
FIG. 3 is a view schematically showing an image decoding apparatus, to which an embodiment of the present disclosure is applicable.
FIG. 4 is a flowchart illustrating an image decoding method.
FIG. 5 is a flowchart illustrating an image encoding method.
FIG. 6 is a flowchart illustrating an image encoding method according to an embodiment of the present disclosure.
FIG. 7 is a flowchart illustrating an image decoding method according to an embodiment of the present disclosure.
FIG. 8 is a flowchart illustrating an image encoding method according to another embodiment of the present disclosure.
FIG. 9 is a flowchart illustrating an image decoding method according to another embodiment of the present disclosure.
FIG. 10 is a flowchart illustrating an image encoding method according to another embodiment of the present disclosure.
FIG. 11 is a flowchart illustrating an image decoding method according to another embodiment of the present disclosure.
FIG. 12 is a view showing a content streaming system, to which an embodiment of the present disclosure is applicable.

### Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image at a specific time, and a slice/tile is a coding unit constituting a portion of a picture, and a picture may be composed of one or more slices/tiles. In addition, a slice/tile may include one or more coding tree units (CTUs).

A "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with the terms such as "sample array", "block" or "area" in some cases. In a general case, an M×N block may include a set (or array) of samples (or a sample array) or transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

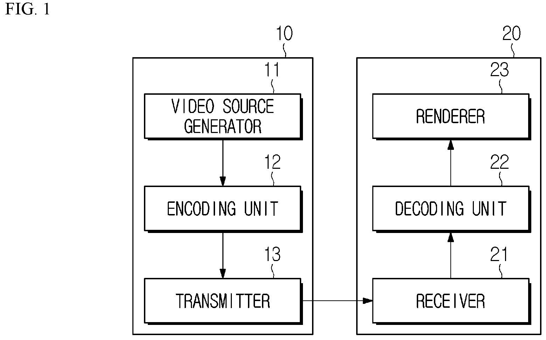

FIG. 1 is a view showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

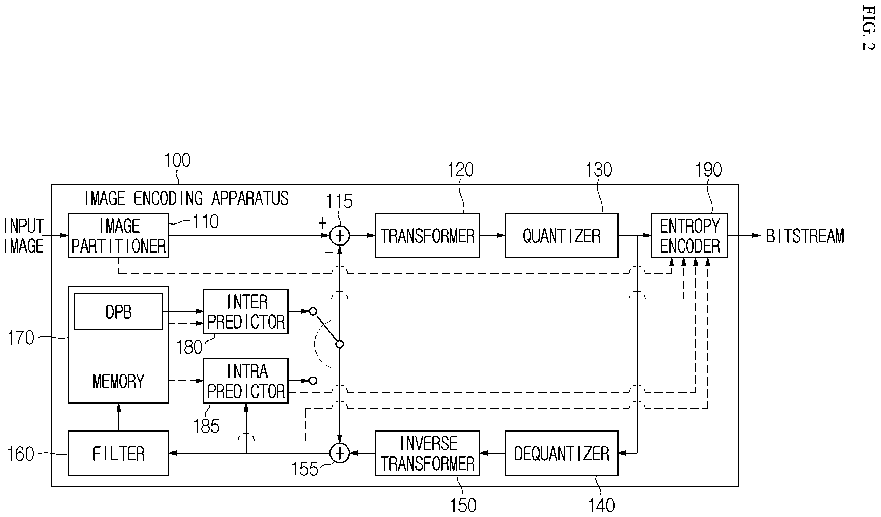

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

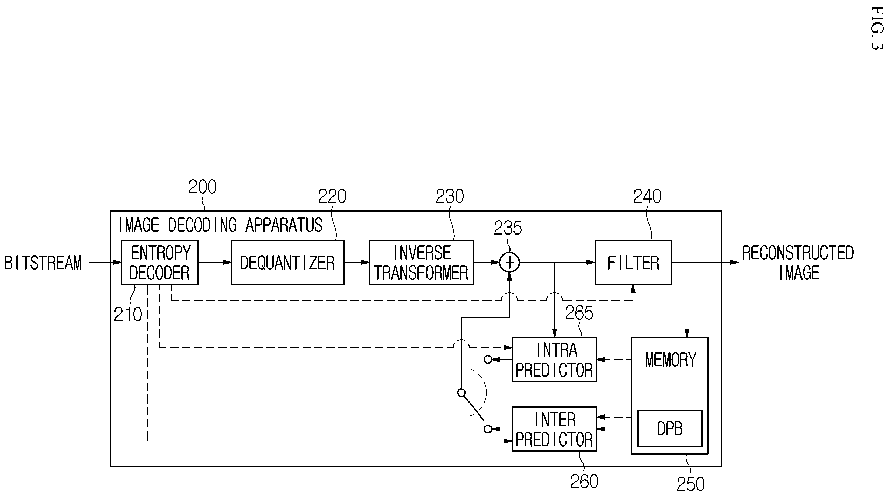

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

### General image/video coding procedure

In image/video coding, a picture configuring an image/video may be encoded/decoded according to a decoding order. An output order of the decoded picture may be set differently from the decoding order, and, based on this, not only forward prediction but also backward prediction may be performed during inter prediction.

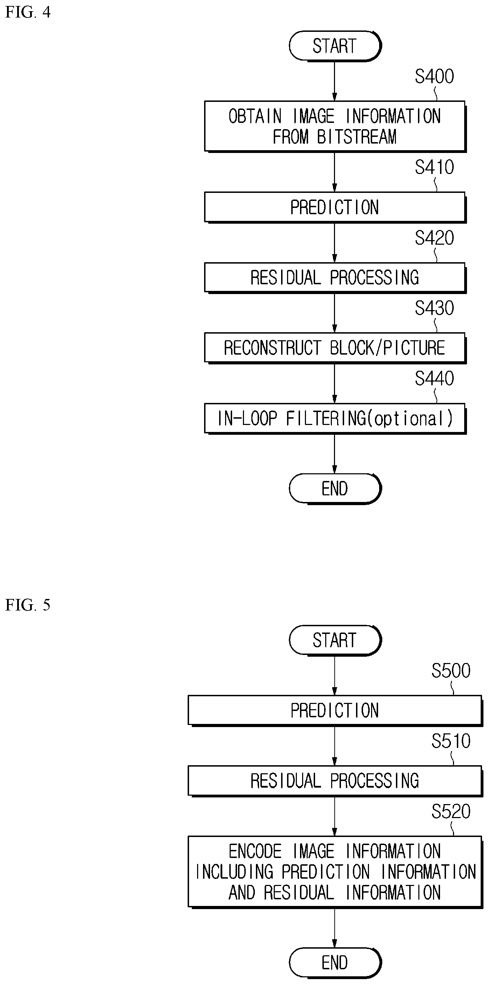

FIG. 4 shows an example of a schematic picture decoding procedure, to which embodiments of the present disclosure is applicable. In FIG. 4, S400 may be performed in the entropy decoder 210 of the image decoding apparatus 200, S410 may be performed in a prediction unit, S420 may be performed in a residual processor, S430 may be performed in the adder 235, and S440 may be performed in the filter 240. S400 may include the information decoding procedure described in the present disclosure, S410 may include the inter/intra prediction procedure described in the present disclosure, S420 may include a residual processing procedure described in the present disclosure, S430 may include the block/picture reconstruction procedure described in the present disclosure, and S440 may include the in-loop filtering procedure described in the present disclosure.

Referring to FIG. 4, the picture decoding procedure may schematically include a procedure (S400) for obtaining image/video information (through decoding) from a bitstream, a picture reconstruction procedure (S410 to S430) and an in-loop filtering procedure (S440) for a reconstructed picture. The picture reconstruction procedure may be performed based on prediction samples and residual samples obtained through inter/intra prediction (S420) and residual processing (S430) (dequantization and inverse transform of the quantized transform coefficient) described in the present disclosure. A modified reconstructed picture may be generated through the in-loop filtering procedure for the reconstructed picture generated through the picture reconstruction procedure, the modified reconstructed picture may be output as a decoded picture, stored in a decoded picture buffer or memory 250 of the image decoding apparatus 200 and used as a reference picture in the inter prediction procedure when decoding the picture later. In some cases, the in-loop filtering procedure may be omitted. In this case, the reconstructed picture may be output as a decoded picture, stored in a decoded picture buffer or memory 250 of the image decoding apparatus 200, and used as a reference picture in the inter prediction procedure when decoding the picture later. The in-loop filtering procedure (S440) may include a deblocking filtering procedure, a sample adaptive offset (SAO) procedure, an adaptive loop filter (ALF) procedure and/or a bi-lateral filter procedure, as described above, some or all of which may be omitted. In addition, one or some of the deblocking filtering procedure, the sample adaptive offset (SAO) procedure, the adaptive loop filter (ALF) procedure and/or the bi-lateral filter procedure may be sequentially applied or all of them may be sequentially applied. For example, after the deblocking filtering procedure is applied to the reconstructed picture, the SAO procedure may be performed. Alternatively, for example, after the deblocking filtering procedure is applied to the reconstructed picture, the ALF procedure may be performed. This may be similarly performed even in the image encoding apparatus 100.

FIG. 5 shows an example of a schematic picture encoding procedure, to which embodiments of the present disclosure is applicable. In FIG. 5, S500 may be performed in the prediction unit of the image encoding apparatus 100 described above with reference to FIG. 2, S510 may be performed in a residual processor, and S520 may be performed in the entropy encoder 190. S500 may include the inter/intra prediction procedure described in the present disclosure, S510 may include the residual processing procedure described in the present disclosure, and S520 may include the information encoding procedure described in the present disclosure.

Referring to FIG. 5, the picture encoding procedure may schematically include not only a procedure for encoding and outputting information for picture reconstruction (e.g., prediction information, residual information, partitioning information, etc.) in the form of a bitstream but also a procedure for generating a reconstructed picture for a current picture and a procedure (optional) for applying in-loop filtering to a reconstructed picture. The image encoding apparatus 100 may derive (modified) residual samples from a quantized transform coefficient through the dequantizer 140 and the inverse transformer 150, and generate the reconstructed picture based on the prediction samples which are output of S500 and the (modified) residual samples. The reconstructed picture generated in this way may be equal to the reconstructed picture generated in the image decoding apparatus 200. The modified reconstructed picture may be generated through the in-loop filtering procedure for the reconstructed picture, may be stored in the decoded picture buffer or memory 170, and may be used as a reference picture in the inter prediction procedure when encoding the picture later, similarly to the image decoding apparatus 200. As described above, in some cases, some or all of the in-loop filtering procedure may be omitted. When the in-loop filtering procedure is performed, (in-loop) filtering related information (parameter) may be encoded in the entropy encoder 190 and output in the form of a bitstream, and the image decoding apparatus 200 may perform the in-loop filtering procedure using the same method as the image encoding apparatus 100 based on the filtering related information.

Through such an in-loop filtering procedure, noise occurring during image/video coding, such as blocking artifact and ringing artifact, may be reduced and subjective/objective visual quality may be improved. In addition, by performing the in-loop filtering procedure in both the image encoding apparatus 100 and the image decoding apparatus 200, the image encoding apparatus 100 and the image decoding apparatus 200 may derive the same prediction result, picture coding reliability may be increased and the amount of data to be transmitted for picture coding may be reduced.

As described above, the picture reconstruction procedure may be performed not only in the image decoding apparatus 200 but also in the image encoding apparatus 100. A reconstructed block may be generated based on intra prediction/inter prediction in units of blocks, and a reconstructed picture including reconstructed blocks may be generated. When a current picture/slice/tile group is an I picture/slice/tile group, blocks included in the current picture/slice/tile group may be reconstructed based on only intra prediction. Meanwhile, when the current picture/slice/tile group is a P or B picture/slice/tile group, blocks included in the current picture/slice/tile group may be reconstructed based on intra prediction or inter prediction. In this case, inter prediction may be applied to some blocks in the current picture/slice/tile group and intra prediction may be applied to the remaining blocks. The color component of the picture may include a luma component and a chroma component and the methods and embodiments of the present disclosure are applicable to the luma component and the chroma component unless explicitly limited in the present disclosure.

### GDR (Gradual Decoding Refresh)

In order to prevent the occurrence of high bitrates while providing random access to a bitstream, a method of using progressive intra refresh (PIR) technology instead of using intra random access point (IRAP) pictures has been proposed, and the PIR technology is referred to as a GDR feature.

The GDR feature may be described using a GDR picture, one or more trailing pictures, and a recovery point picture in a coded video sequence (CVS) of a bitstream. The GDR picture is a randomly accessible picture, and each VCL NAL unit may be a picture having a NAL unit type such as GDR_NUT. A CVS is a series of pictures starting from a GDR picture, and may include all pictures up to the next GDR picture or up to the end of the bitstream.

The GDR feature may operate over a series of pictures starting from a GDR picture and ending with a recovery point picture. The GDR picture may include a refreshed area and an unrefreshed area. Here, the refreshed area may be referred to as a clean area or a correctly decoded area, and the unrefreshed area may be referred to as a dirty area or a incorrectly decoded area. A trailing picture immediately adjacent to a GDR picture may also include a refreshed area and an unrefreshed area. The refreshed area may be coded with reference to the refreshed area of a leading picture in the CVS. The refreshed area of the trailing picture may be expanded as the coding process moves or advances in a consistent direction (e.g., from the GDR picture to the recovery point picture), and the unrefreshed area may be correspondingly shrunk.

### Virtual boundary

When virtual boundary signaling is used, in-loop filtering may be turned off at signaled locations within a coded picture, and this location does not need to be aligned with CTU boundaries. Furthermore, virtual boundaries do not introduce additional in-picture prediction breaks, such as those introduced by slices and tiles, when used for this purpose. Virtual boundaries may be useful for at least two features. First, for 360-degree video coding, if the 360-degree video uses a particular projection format that introduces discontinuities, such as non-aligned face boundaries in a cubemap projection, when the virtual boundary is used, in-loop filtering may be disabled at this boundary without having to adjust the size of the content to align a CTV boundary with projection discontinuities. Second, when the GDR feature is used, the boundary between the refreshed (i.e. correctly decoded) area and the unrefreshed area in the reconstructed image is signaled as a virtual boundary, allowing in-loop filtering to be disabled at the virtual boundary, thus avoiding decoding inconsistencies of some samples at or near the virtual boundary. This feature may be useful when an application decides to display a correctly decoded area during the GDR process.

### Problems of the Related Art

Currently, a virtual boundary disables an in-loop filter on both sides of the virtual boundary. If the virtual boundary is used to implement a feature such as GDR feature, the virtual boundary may not be optimal or suboptimal. It is desirable to prevent the in-loop filter from crossing from a refreshed area (i.e., clean area) to an unrefreshed area (i.e., dirty area) (i.e., using samples in the unrefreshed area to apply the in-loop filter to the block in the refreshed area is not allowed), but the application of the in-loop filter crossing from the unrefreshed area to the refreshed area needs to be allowed (i.e., using samples in the refreshed area to apply the in-loop filter to the block in the unrefreshed area must be allowed).

A second-best solution (using a virtual boundary that does not allow the in-loop filter on both sides of the virtual boundary in a particular application or feature) may result in performance degradation in both objective and subjective measures. If the in-loop filter cannot be applied to the block along the virtual boundary from the unrefreshed area, the coding performance may be degraded in terms of possible compression ratio, and subjective performance will be degraded due to artifacts being blocked along that virtual boundary.

### Embodiment

The present disclosure proposes various embodiments to solve the problems of the above-mentioned related art.

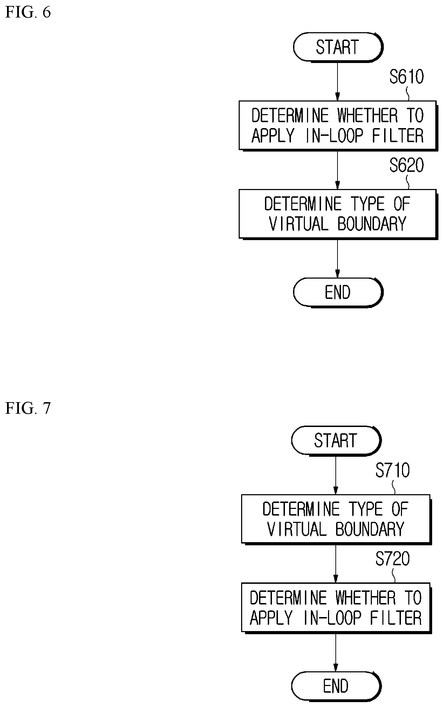

FIG. 6 is a flowchart illustrating an image encoding method according to an embodiment of the present disclosure, and FIG. 7 is a flowchart illustrating an image decoding method according to an embodiment of the present disclosure.

Referring to FIG. 6, the image encoding apparatus 100 may determine whether to apply an in-loop filter to a block corresponding to a virtual boundary (S610).

The correspondence between the virtual boundary and the block may include cases where the boundary of the block and the virtual boundary are parallel to each other, cases where the boundary of the block and the virtual boundary coincide with each other, cases where the boundary of the block constitutes part or all of the virtual boundary, etc.

The image encoding apparatus 100 may determine the type of the virtual boundary based on the determination of whether to apply the in-loop filter (S620).

The type of the virtual boundary may include a type in which the in-loop filter is bidirectionally disabled for the virtual boundary, a type in which the in-loop filter is disabled for the virtual boundary in a single direction, and a type in which the in-loop filter is disabled for the virtual boundary in another single direction.

The virtual boundary may include a vertical virtual boundary and a horizontal virtual boundary. The horizontal virtual boundary corresponds to a virtual boundary in the horizontal direction, and the vertical virtual boundary corresponds to a virtual boundary in the vertical direction.

In the case of a horizontal virtual boundary, the following types may be present (be used):
a. Horizontal virtual boundary where the in-loop filter is disabled for a block whose top or bottom boundary is along the virtual boundary
b. Horizontal virtual boundary where the in-loop filter is disabled for a block whose bottom boundary is along the virtual boundary
c. Horizontal virtual boundary where the in-loop filter is disabled for a block whose top boundary is along the virtual boundary

In the case of a vertical virtual boundary, the following types may be present (be used):
a. Vertical virtual boundary where the in-loop filter is disabled for a block whose right or left boundary is along the virtual boundary.
b. Vertical virtual boundary where the in-loop filter is disabled for a block whose right boundary is along the virtual boundary.
c. Vertical virtual boundary where the in-loop filter is disabled for a block whose left boundary is along the virtual boundary.

"Along", which indicates the relationship between the boundary of the block and the virtual boundary, may include cases where the boundary of the block and the virtual boundary are parallel to each other, cases where the boundary of the block and the virtual boundary coincide with each other, cases where the boundary of the block constitutes part or all of the virtual boundary, cases where the boundary of the block and the virtual boundary correspond to each other, etc.

The image encoding apparatus 100 may encode first information indicating the result of determining whether or not to signal information about the virtual boundary in a bitstream. That is, first information indicating whether or not to signal the information about the virtual boundary may be encoded in the bitstream. For example, a first value (e.g., 0) of the first information may indicate that the information about the virtual boundary is not signaled, and a second value (e.g., 1) of the first information may indicate that the information about the virtual boundary is signaled.

Upon determining that the information about the virtual boundary is signaled, the image encoding apparatus 100 may encode type information in a bitstream. The type information is information indicating the type of the virtual boundary, and may indicate any one of the values (0, 1, 2, 3) indicating the type of the virtual boundary.

The type information may include horizontal type information indicating the type of the horizontal virtual boundary and vertical type information indicating the type of the vertical virtual boundary.

Horizontal type information may be implemented as a 2-bit syntax element to indicate the type of the horizontal virtual boundary, as follows:
- 0: Horizontal virtual boundary, where the in-loop filter is disabled for a block whose top or bottom boundary is along the virtual boundary.
- 1: Horizontal virtual boundary, where the in-loop filter is disabled for a block whose bottom boundary is along the virtual boundary.
- 2: Horizontal virtual boundary, where the in-loop filter is disabled for a block whose top boundary is along the virtual boundary.
- 3: reserved

The vertical type information may be implemented as a 2-bit syntax element to indicate the type of the vertical virtual boundary, as follows:
- 0: Vertical virtual boundary where the in-loop filter is disabled for a block whose right or left boundary is along the virtual boundary.
- 1: Vertical virtual boundary where the in-loop filter is disabled for a block whose right boundary is along the virtual boundary.
- 2: Vertical virtual boundary where the in-loop filter is disabled for a block whose left boundary is along the virtual boundary.

The value 0 (first value) of the syntax element corresponding to the type information may indicate the first type in which the in-loop filter is bidirectionally disabled for the virtual boundary, the value 1 (second value) of the syntax element may indicate the second type in which the in-loop filter is disabled for the virtual boundary in a single direction, and the value 2 (third value) of the syntax element may indicate the third type in which the in-loop filter is disabled for the virtual boundary in another single direction.

Here, "the in-loop filter is bidirectionally disabled" may indicate that among two areas separated by the virtual boundary, both "applying, using samples in one area, the in-loop filter to a block in the other area" and "applying the in-loop filter to a block in one area using samples in the other area" are disabled. Additionally, "the in-loop filter is disabled in a single direction or in another single direction" may indicate that among two areas separated by the virtual boundary, "applying, using samples in one area, the in-loop filter to a block in the other area" is disabled, while "applying the in-loop filter to a block in one area using samples in the other area" is enabled.

Referring to FIG. 7, the image decoding apparatus 200 may determine the type of the virtual boundary (S710).

The type of the virtual boundary may include a type in which the in-loop filter is bidirectionally disabled for the virtual boundary, a type in which the in-loop filter is disabled for the virtual boundary in a single direction, a type in which the in-loop filter is disabled for the virtual boundary in another single direction, etc.

The type of the virtual boundary may be determined based on type information obtained from a bitstream. The type information is information indicating the type of the virtual boundary and may indicate any one of the values (0, 1, 2, 3) indicating the type of the virtual boundary. Specifically, if the value of the type information is 0, the top/right boundary or the bottom/left boundary of the block may be determined to be a virtual boundary where the in-loop filter is disabled for a block along the virtual boundary, if the value of the type information is 1, the top/right boundary of the block may be determined to be a virtual boundary where the in-loop filter is disabled for a block along the virtual boundary, and if the value of the type information is 2, the bottom/left boundary of the block may be determined to be a virtual boundary where the in-loop filter is disabled for a block along the virtual boundary.

The image decoding apparatus 200 may determine whether to apply the in-loop filter to a block based on the type of the virtual boundary (S720).

For example, if the type of the vertical virtual boundary is a type in which the in-loop filter is unidirectionally disabled, the in-loop filter may be determined not to be applied unidirectionally, and if the type of the horizontal virtual boundary is a type in which the in-loop filter is unidirectionally disabled, the in-loop filter may be determined not to be applied unidirectionally.

Whether or not to obtain type information may be determined based on first information obtained from a bitstream. The first information is information about a virtual boundary, and a first value (e.g., 0) of the first information may indicate that the information about the virtual boundary is not signaled, and a second value (e.g., 1) of the first information may indicate that the information about the virtual boundary is signaled. The type information may be obtained from the bitstream when the first information indicates that the information about the virtual boundary is signaled, and may not be obtained when the first information indicates that the information about the virtual boundary is not signaled.

In this way, the present disclosure can improve coding efficiency and subjective image quality by utilizing an additional type of virtual boundary where the in-loop filter is disabled on only one side of the virtual boundary (unidirectional), in addition to the virtual boundary where the in-loop filter is disabled on both sides of the virtual boundary (bidirectional).

### Embodiment 1

Embodiment 1 is an embodiment of a method of signaling and obtaining first information and type information through an SPS level.

The syntax structure for Embodiment 1 is shown in Table 1.

**[Table 1]**

| | |
|---|---|
| seq_parameter_set_rbsp( ) { | **Descriptor** |
| ... | |
| **sps_virtual_boundaries_enabled_flag** | u(l) |
| if( sps_virtual_boundaries_enabled_flag ) { | |
| **sps_virtual_boundaries_present_flag** | u(l) |
| if( sps_virtual_boundaries_present_flag ) { | |
| **sps_num_ver_virtual_boundaries** | ue(v) |
| for( i = 0; i < sps_num_ver_virtual_boundaries; i++ ) { | |
| **sps_virtual_boundary_type_x**[ i ] | u(2) |
| **sps_virtual_boundary_pos_x_minus1**[ i ] | ue(v) |
| } | |
| **sps_num_hor_virtual_boundaries** | ue(v) |
| for( i = 0; i < sps_num_hor_virtual_boundaries; i++ ) { | |
| **sps_virtual_boundary_type_y**[ i ] | u(2) |
| **sps_virtual_boundary_pos_y_minus1**[ i ] | ue(v) |
| } | |
| } | |
| } | |
| ... | |
| } | |

sps_virtual_boundaries_present_flag is the first information, sps_virtual_boundaries_present_flag==0 may indicate that information about the virtual boundary is not signaled at the SPS level, and sps_virtual_boundaries_present_flag==1 may indicate that information about the virtual boundary is signaled at the SPS level.

sps_virtual_boundary_type_x may correspond to vertical type information indicating the type of the vertical virtual boundary. sps_virtual_boundary_type_x==0 may indicate that the type of the corresponding vertical virtual boundary is a first type, sps_virtual_boundary_type_x==1 may indicate that the type of the corresponding vertical virtual boundary is a second type, and sps_virtual_boundary_type_x==2 may indicate that the type of the corresponding vertical virtual boundary is a third type.

sps_virtual_boundary_type_y may correspond to horizontal type information indicating the type of the horizontal virtual boundary. sps_virtual_boundary_type_y==0 may indicate that the type of the corresponding horizontal virtual boundary is a first type, sps_virtual_boundary_type_y==1 may indicate that the type of the corresponding horizontal virtual boundary is a second type, and sps_virtual_boundary_type_y==2 may indicate that the type of the corresponding horizontal virtual boundary is a third type.

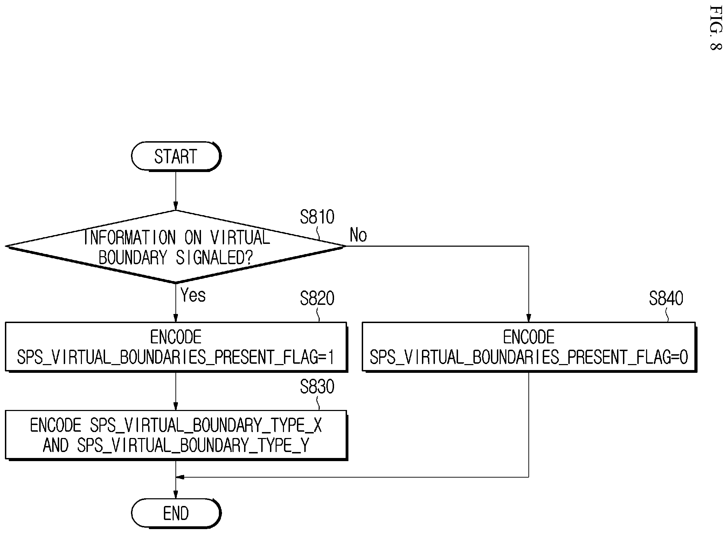

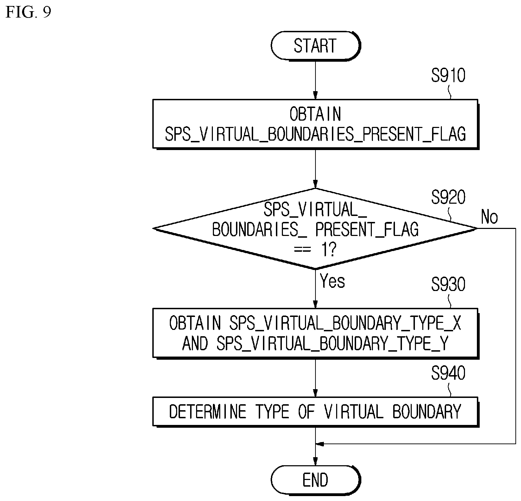

A flowchart illustrating an image encoding method according to Embodiment 1 is shown in FIG. 8, and a flowchart illustrating an image decoding method according to Embodiment 1 is shown in FIG. 9.

Referring to FIG. 8, the image encoding apparatus 100 may determine whether to signal information about a virtual boundary (S810). Upon determining that the information about the virtual boundary is signaled, the image encoding apparatus 100 may encode the value of sps_virtual_boundaries_present_flag as 1 (S820) and encode type information (sps_virtual_boundary_type_x and sps_virtual_boundaiy_type_y) (S830).

In contrast, upon determining that the information about the virtual boundary is not signaled, the image encoding apparatus 100 may encode the value of sps_virtual_boundaries_present_flag as 0 (S840). In this case, the type information (sps_virtual_boundary_type_x and sps_virtual_boundary_type_y) may not be encoded.

Referring to FIG. 9, the image decoding apparatus 200 may obtain sps_virtual_boundaries_present_flag from a bitstream (S910) and determine the value of sps_virtual_boundaries_present_flag (S920).

When sps_virtual_boundaries_present_flag==1, the image decoding apparatus 200 may obtain type information (sps_virtual_boundary_type_x and sps_virtual_boundary_type_y) from the bitstream (S930), and determine the type of the virtual boundary based on the type information (sps_virtual_boundary_type_x and sps_virtual_boundary_type_y) (S940).

In contrast, when sps_virtual_boundaries_present_flag==0, the type information is not signaled, so the process of obtaining the type information (S930) and the process of determining the type of the virtual boundary (S940) may not be performed.

### Embodiment 2

Embodiment 2 is an embodiment of a method of signaling and obtaining first information and type information through a PH level.

The syntax structure for Embodiment 2 is shown in Table 2.

**[Table 2]**

| | |
|---|---|
| picture_header_structure( ) { | **Descriptor** |
| ... | |
| if( sps_virtual_boundaries_enabled_flag && !sps_virtual_boundaries_present_flag ) { | |
| **ph_virtual_boundaries_present_flag** | u(1) |
| if( ph_virtual_boundaries_present_flag ) { | |
| **ph_num_ver_virtual_boundaries** | ue(v) |
| for( i = 0; i < ph_num_ver_virtual_boundaries; i++ ) { | |
| **ph_virtual_boundary_type_x**[ i ] | u(2) |
| **ph_virtual_boundary_pos_x_minus1**[ i ] | ue(v) |
| } | |
| **ph_num_hor_virtual_boundaries** | ue(v) |
| for( i = 0; i < ph_num_hor_virtual_boundaries; i++ ) { | |
| **ph_virtual_bonndary_type_y**[ i ] | u(2) |
| **ph_virtual_boundary_pos_y_minus1**[ i ] | ue(v) |
| } | |
| } | |
| } | |
| ... | |
| } | |

The first information may include a first flag signaled and obtained through an SPS level and a second flag signaled and obtained through a PH level. That is, the first information may be signaled and obtained through the SPS level and the PH level. The first flag may be sps_virtual_boundaries_present_flag, and the second flag may be ph_virtual_boundaries_present_flag. The type information may be signaled and obtained through the SPS level or the PH level depending on the values of the first flag and the second flag.

ph_virtual_boundaries_present_flag is first information, ph_virtual_boundaries_present_flag==0 may indicate that information about the virtual boundary is not signaled at the PH level, and ph_virtual_boundaries_present_flag==1 may indicate that information about the virtualboundary is signaled at the PH level.

ph_virtual_boundary_type_x may correspond to vertical type information indicating the type of the vertical virtual boundary. ph_virtual_boundary_type_x==0 may indicate that the type of the corresponding vertical virtual boundary is a first type, ph_virtual_boundary_type_x==1 may indicate that the type of the corresponding vertical virtual boundary is a second type, and ph_virtual_boundary_type_x==2 may indicate that the type of the corresponding vertical virtual boundary is a third type.

ph_virtual_boundary_type_y may correspond to horizontal type information indicating the type of the horizontal virtual boundary. ph_virtual_boundary_type_y==0 may indicate that the type of the corresponding horizontal virtual boundary is a first type, ph_virtual_bounday_type_y==1 may indicate that the type of the corresponding horizontal virtual boundary is a second type, and ph_virtual_boundary_type_y==2 may indicate that the type of the corresponding horizontal virtual boundary is a third type.

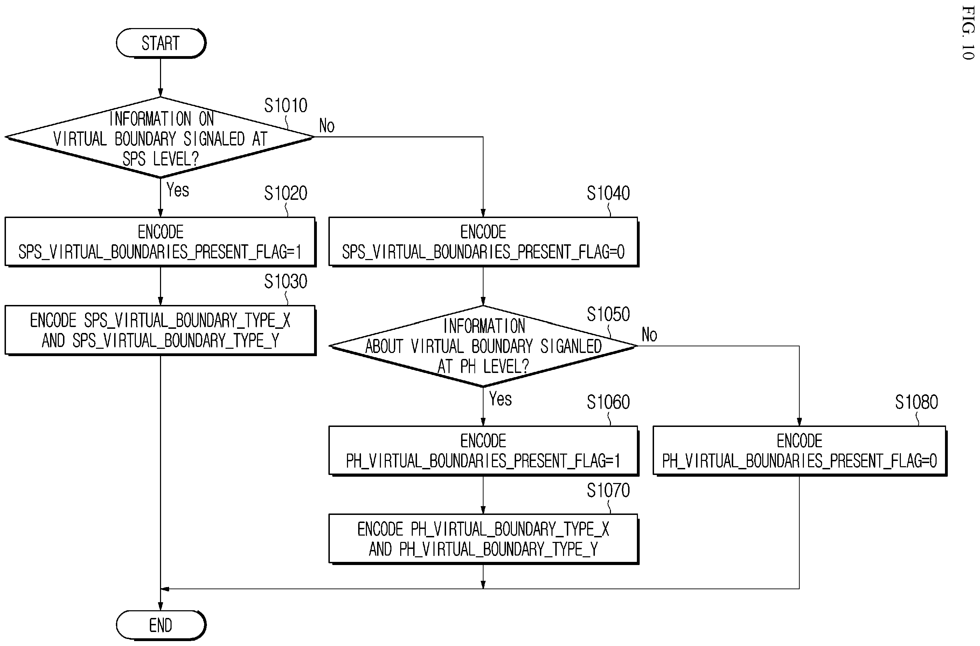

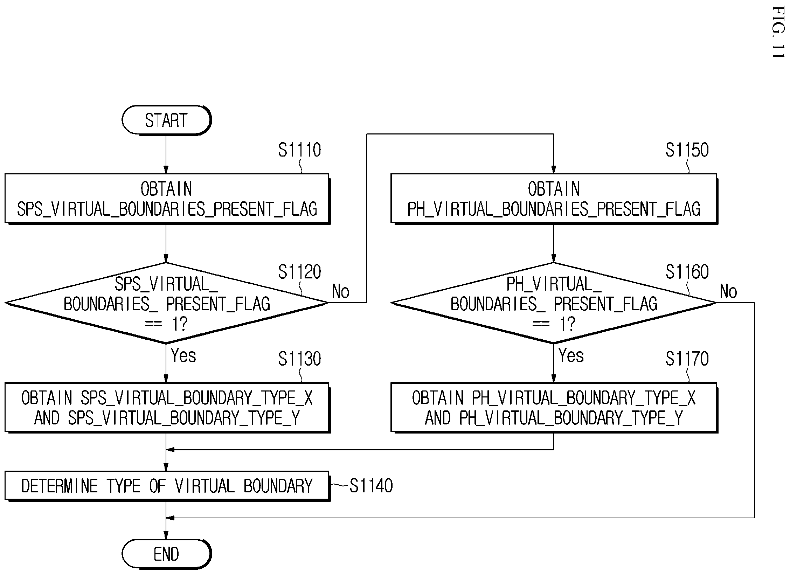

A flowchart illustrating an image encoding method according to Embodiment 2 is shown in FIG. 10, and a flowchart illustrating an image decoding method according to Embodiment 2 is shown in FIG. 11.

Referring to FIG. 10, the image encoding apparatus 100 may determine whether to signal information about a virtual boundary (S1010). Upon determining that information about the virtual boundary is signaled, the image encoding apparatus 100 may encode the value of sps_virtual_boundaries_present_flag as 1 (S1020) and encode type information (sps_virtual_boundary_type_x and sps_virtual_boundary_type_y) (S1030). Conversely, upon determining that information about the virtual boundary is not signaled, the image encoding apparatus 100 may encode the value of sps_virtual_boundaries_present_flag as 0 (S1040).

In this case, the image encoding apparatus 100 may determine whether to signal the information about the virtual boundary at the PH level (S1050). Upon determining that the information about the virtual boundary is signaled at the PH level, the image encoding apparatus 100 may encode the value of ph_virtual_boundaries_present_flag as 1 (S1060) and encode type information (ph_virtual_boundary_type_x and ph_virtual_boundary_type_y) (S1070).

In contrast, upon determining the information about virtual boundar is not signaled at the PH level, the image encoding apparatus 100 may encode the value of ph_virtual_boundaries_present_flag as 0 (S1080). In this case, the type information (ph_virtual_boundary_type_x and ph_virtual_boundary_type_y) may not be encoded.

Referring to FIG. 11, the image decoding apparatus 200 may obtain sps_virtual_boundaries_present_flag from a bitstream (S1110) and determine the value of sps_virtual_boundaries_present_flag (S1120). When sps_virtual_boundaries_present_flag==1, the image decoding apparatus 200 may obtain type information (sps_virtual_boundary_type_x and sps_virtual_boundary_type_y) from the bitstream (S1130) and determine the type of the virtual boundary based on the type information (sps_virtual_boundary_type_x and sps_virtual_boundary_type_y) (S1140).

In contrast, when sps_virtual_boundaries_present_flag==0, the image decoding apparatus 200 may obtain ph_virtual_boundaries_present_flag from the PH level of the bitstream (S1150) and determine the value of ph_virtual_boundaries_present_flag (S1160).

If ph_virtual_boundaries_present_flag==1, the image decoding apparatus 200 may obtain type information (ph_virtual_boundary_type_x and ph_virtual_boundary_type_y) from the PH level (S1170) and determine the type of the virtual boundary based on the type information (S1140). In contrast, if ph_virtual_boundaries_present_flag==0, since the type information is not signaled, the process of obtaining the type information (S1170) and the process of determining the type of the virtual boundary (S1140) may not be performed.

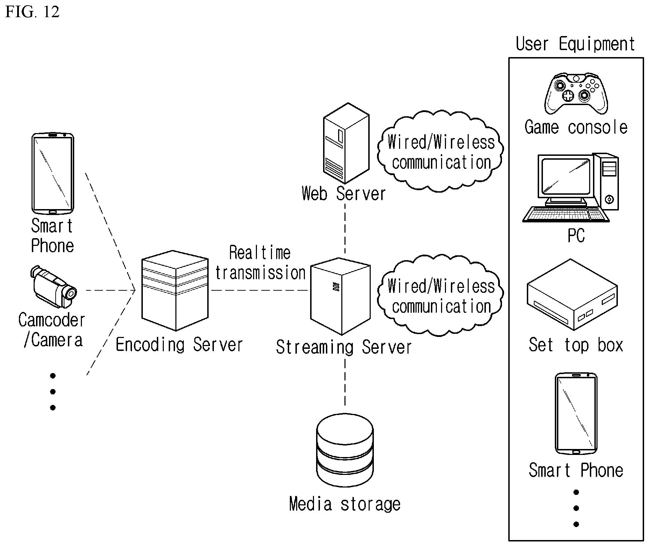

FIG. 12 is a view showing a content streaming system, to which an embodiment of the present disclosure is applicable.

As shown in FIG. 12, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to encode or decode an image.

## Claims

1. An image decoding method performed by an image decoding apparatus, the image decoding method comprising:
determining a type of a virtual boundary; and
determining whether to apply an in-loop filter to a block based on the type of the virtual boundary,
wherein the type of the virtual boundary includes a type in which the in-loop filter for the block is unidirectionally disabled for the virtual boundary.

2. The image decoding method of claim 1,
wherein the virtual boundary includes a vertical virtual boundary, and
wherein based on the type of the vertical virtual boundary being a type in which the in-loop filter is unidirectionally disabled, it is determined that the in-loop filter is not unidirectionally applied.

3. The image decoding method of claim 1,
wherein the virtual boundary includes a horizontal virtual boundary, and
wherein based on the type of the horizontal virtual boundary being a type in which the in-loop filter is unidirectionally disabled, it is determined that the in-loop filter is not unidirectionally applied.

4. The image decoding method of claim 1, wherein the type of the virtual boundary is determined based on type information obtained from a bitstream.

5. The image decoding method of claim 4,
wherein the virtual boundary includes a vertical virtual boundary, and
wherein the type information includes vertical type information indicating a type of the vertical virtual boundary.

6. The method decoding method of claim 5,
wherein a first value of the vertical type information indicates a first type in which the in-loop filter is bidirectionally disabled for the vertical virtual boundary, and
wherein a right boundary or left boundary of the block corresponds to the vertical virtual boundary.

7. The image decoding method of claim 5,
wherein a second value of the vertical type information indicates a second type in which the in-loop filter is unidirectionally disabled for the vertical virtual boundary, and
wherein a right boundary of the block corresponds to the vertical virtual boundary.

8. The image decoding method of claim 5,
wherein a third value of the vertical type information indicates a third type in which the in-loop filter is unidirectionally disabled for the vertical virtual boundary, and
wherein a left boundary of the block corresponds to the vertical virtual boundary.

9. The image decoding method of claim 4,
wherein the virtual boundary includes a horizontal virtual boundary, and
wherein the type information includes horizontal type information indicating a type of the horizontal virtual boundary.

10. The method decoding method of claim 9,
wherein a first value of the horizontal type information indicates a first type in which the in-loop filter is bidirectionally disabled for the horizontal virtual boundary, and
wherein a top boundary or bottom boundary of the block corresponds to the horizontal virtual boundary.

11. The image decoding method of claim 9,
wherein a second value of the horizontal type information indicates a second type in which the in-loop filter is unidirectionally disabled for the horizontal virtual boundary, and
wherein a top boundary of the block corresponds to the horizontal virtual boundary.

12. The image decoding method of claim 6,
wherein a third value of the horizontal type information indicates a third type in which the in-loop filter is unidirectionally disabled for the horizontal virtual boundary, and
wherein a bottom boundary of the block corresponds to the horizontal virtual boundary.

13. The image decoding method of claim 4,
wherein the type information is obtained based on a second flag obtained from a picture header (PH) level of the bitstream indicating that information about the virtual boundary is signaled at the PH level, and
wherein the second flag is obtained based on a first flag obtained from a sequence parameter set (SPS) level of the bitstream indicating that the information about the virtual boundary is not signaled at the SPS level.

14. An image encoding method performed by an image encoding apparatus, the image encoding method comprising:
determining whether to apply an in-loop filter to a block corresponding to a virtual boundary; and
determining a type of the virtual boundary based on the determination of whether to apply the in-loop filter,
wherein the type of the virtual boundary includes a type in which the in-loop filter for the block is unidirectionally disabled for the virtual boundary.

15. A method of transmitting a bitstream generated by an image encoding method, the image encoding method comprising:
determining whether to apply an in-loop filter to a block corresponding to a virtual boundary; and
determining a type of the virtual boundary based on the determination of whether to apply the in-loop filter,
wherein the type of the virtual boundary includes a type in which the in-loop filter for the block is unidirectionally disabled for the virtual boundary.
